# EUROPEAN PATENT APPLICATION

(11) **EP 4 425 617 A1**
(43) Date of publication of application: **04.09.2024**
(21) Application number: 22894349.4
(22) Date of filing: 12.08.2022
(51) Int. Cl.: H01M 4/62, H01M 4/505, H01M 4/525, H01M 10/0525

(54) **COMPOSITELY COATED TERNARY PRECURSOR, AND PREPARATION METHOD THEREFOR AND USE THEREOF**

(30) Priority: 19.11.2021 CN 202111408479
(71) Applicant: Guangdong Brunp Recycling Technology Co., Ltd., Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: LI, Yongguang, Foshan, Guangdong 528137 (CN); LI, Changdong, Foshan, Guangdong 528137 (CN); LIU, Genghao, Foshan, Guangdong 528137 (CN); LI, Weiquan, Foshan, Guangdong 528137 (CN); RUAN, Dingshan, Foshan, Guangdong 528137 (CN); CAI, Yong, Foshan, Guangdong 528137 (CN)
(74) Representative: Torner, Juncosa I Associats, SL
(86) International application number: PCT/CN2022/112235
(87) International publication number: WO 2023/087806

(57) **Abstract**

Disclosed in the present invention are a compositely coated ternary precursor, and a preparation method therefor and the use thereof. The material comprises a ternary precursor and a coating layer attached to a surface of the ternary precursor, wherein the coating layer is obtained from a precipitation reaction of first metal ions and first polyanions. In the present invention, metal ions and polyanions can undergo a precipitation reaction to form a precipitate, and since a surface of the ternary precursor has a large number of active sites, a relatively high specific surface energy is achieved, and the precipitate is easy to adhere and grow, such that a uniformly distributed coating layer is formed on the surface of the ternary precursor. After the coated precursor is sintered into a positive electrode material, part of the coating can form a protective layer on the surface of the material, so that the dissolution of Ni and Co is reduced, the side reaction of the positive electrode material and an electrolyte is inhibited, and the irreversible phase change of the surface of the material is reduced, thereby improving the stability of the ternary material; and the other part of the coating can permeate into the material to form bulk phase doping.

## Description

### TECHNICAL FIELD

The present disclosure belongs to the technical field of cathode materials for lithium ion batteries, and more particularly, relates to a composite coated ternary precursor, and a preparation method therefor and use thereof.

### BACKGROUND

Ternary cathode materials for lithium-ion batteries, comprising NCM materials and NCA materials, have been criticized for safety performances thereof despite high specific capacity and cycle performances thereof. In recent years, electric vehicles using ternary lithium-ion batteries have caught fire for many times, which makes people's demand for the safety of traction batteries more and more intense. How to improve the safety performances of the ternary batteries under the condition of ensuring the energy density has become one of the mainstream research orientations of traction batteries for electric vehicles.

The modification orientations of ternary cathode materials comprise coating, doping, a core-shell structure, a structure with concentration gradients, quaternary materials and the like, which improves the cycle performances and safety performances of the batteries by improving the stability of the material structure. With regard to coating, coating elements are mostly added in a sintering stage, which not only increases number of times of sintering, but also causes unevenness of a coating material. Some methods are to coat a surface of a precursor, but elements of single property are coated usually, which can only achieve very limited improvement effect, or increases labor cost after multi-stage coating. Moreover, the operation difficulty is increased, and the risk of material segregation is increased.

### SUMMARY

The present disclosure aims at solving at least one of the above-mentioned technical problems in the existing technology. Therefore, the present disclosure provides a composite coated ternary precursor, and a preparation method therefor and use thereof.

According to one aspect of the present disclosure, a composite coated ternary precursor is proposed, comprising a ternary precursor and a coating layer attached to a surface of the ternary precursor, wherein the coating layer is obtained by a precipitation reaction between a first metal ion and a first polyanion, the first metal ion is one or more selected from a group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ or Bi⁵⁺, and the first polyanion is one or more selected from a group consisting of SiO₃²⁻, AlO₂⁻, B₄O₇²⁻, SO₄²⁻, PO₄³⁻, BO₃³⁻, MoO₄²⁻ or WO₄²⁻.

In some embodiments of the present disclosure, a content of the coating layer is 0.5% to 5% of a mass fraction of the ternary precursor.

In some embodiments of the present disclosure, a particle size of the ternary precursor is preferably 3 µm to 12 µm.

In some embodiments of the present disclosure, the ternary precursor is doped with a second metal ion and a second polyanion, the second metal ion is one or more selected from a group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ or Bi⁵⁺, and the second polyanion is one or more selected from a group consisting of SiO₃²⁻, PO₄³⁻, MoO₄²⁻ or B₄O₇²⁻.

In some embodiments of the present disclosure, a total doping amount of the second metal ion and the second polyanion is 0.5% to 5% of the mass of the ternary precursor.

The present disclosure further provides a preparation method for the composite coated ternary precursor, including:
S1: respectively preparing a first metal salt solution and a first polyanion salt solution, wherein the first metal salt solution is one or more selected from a group consisting of Mg²⁺, Sc³⁺, Ti³⁺, V²⁺, Cr²⁺, Cu²⁺, Zn²⁺, Ge²⁺ , Zr⁴⁺, Nb⁵⁺, In³⁺, Sb³⁺, Tb⁴⁺, Ta⁴⁺, Re⁴⁺, Ir³⁺, Pb⁴⁺ or Bi⁵⁺ salt solutions, and the first polyanion salt solution is one or more selected from a group consisting of SiO₃²⁻, AlO₂⁻, B₄O₇²⁻, SO₄²⁻, PO₄³⁻, BO₃³⁻, MoO₄²⁻ or WO₄²⁻ salt solutions;
S2: at a certain stirring speed and temperature, adding the first metal salt solution and the first polyanion salt solution into a ternary precursor slurry to carry out a precipitation reaction, keeping pH of a reaction system to be between 6.0 and 9.0, and obtaining a precipitate after the reaction; and
S3: washing and drying the precipitate to obtain the composite coated ternary precursor.

In some embodiments of the present disclosure, in step S1, concentrations of the first metal salt solution and the first polyanion salt solution are independently 0.5 mol/L to 2 mol/L.

In some embodiments of the present disclosure, in step S2, the first metal salt solution and the first polyanion salt solution are added within 0.5 to 1.5 hours, and aged for 0.5 to 1.5 hours after the addition, and a total volume of the first metal salt solution and the first polyanion salt solution is 5 L to 15 L.

In some embodiments of the present disclosure, when the ternary precursor is doped with the second metal ion and the second polyanion, the ternary precursor is prepared by a method comprising: dissolving soluble nickel salt, cobalt salt, manganese salt and second metal salt in water according to proportions to prepare a mixed metal salt solution, dissolving sodium hydroxide and second polyanion salt in water to prepare a doped precipitant, and stirring the same at a certain speed and temperature, adding aqueous ammonia first, and then adding sodium hydroxide to adjust pH to be between 9.5 and 12.5, and then adding the mixed metal salt solution, the doped precipitant and the aqueous ammonia for a coprecipitation reaction to obtain the ternary precursor, wherein the second metal salt is one or more selected from a group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ or Bi⁵⁺ salt, and the second polyanion salt is one or more selected from a group consisting of SiO₃²⁻, PO₄³⁻, MoO₄²⁻ or B₄O₇²⁻ salt. The second polyanion salt cannot be directly added into the mixed metal salt solution, because the second polyanion salt will be subjected to a precipitation reaction with the metal ions. Preferably, the stirring is carried out at a speed of 200 r/min to 600 r/min, the coprecipitation reaction is carried out at a reaction temperature of 35 °C to 85 °C, and a concentration of the aqueous ammonia in the coprecipitation reaction is kept at 0.5 g/L to 12 g/L. The particle size of the ternary precursor is 3 µm to 12 µm. Metal elements doped in the mixed salt solution can be evenly mixed on an atomic scale to obtain a precursor with evenly distributed elements. Radiuses of the metal cations are similar to those of Li⁺ and Ni²⁺, which can effectively reduce a disordering degree of lithium and nickel and inhibit capacity decay of the material. The polyanions doped in a precipitant need to participate in a neutralization reaction before crystallization in the process of coprecipitation, so the polyanions can be slowly released and evenly distributed in particles of the precursor. The radiuses of the doped polyanions are large, which can increase volume of a unit cell, play a role of supporting a three-dimensional frame structure of the material, expand a lithium ion transmission channel, inhibit phase transition of the material during charging and discharging processes, and improve electrochemical performances of the material. In addition, the polyanions can provide a part of oxygen atoms in a sintering process, which can reduce oxygen defects inside the material. The polyanions have a strong network structure formed of covalent bonds, which can inhibit oxygen evolution of the material in the charging and discharging processes and reduce side reactions. A synergistic effect of anions and cations can effectively improve the capacity and cycle performances of the ternary material.

In some embodiments of the present disclosure, in the mixed metal salt solution, the second metal salt accounts for 0.1% to 2% of a total molar number of the nickel salt, the cobalt salt and the manganese salt.

In some embodiments of the present disclosure, a concentration of the mixed metal salt solution is 0.5 mol/L to 2.0 mol/L.

In some embodiments of the present disclosure, a concentration of the doped precipitant is 2 mol/L to 10 mol/L, and a molar ratio of the sodium hydroxide to the second polyanion salt in the doped precipitant is (30 to 300): 1.

The present disclosure further provides a ternary cathode material prepared by sintering the composite coated ternary precursor.

According to a preferred embodiment of the present disclosure, the present disclosure has at least the following beneficial effects.
1. The metal ion and the polyanion of the present disclosure can undergo a precipitation reaction to form a precipitate. Due to a large number of active sites on the surface of the ternary precursor, the surface of the ternary precursor has a high specific surface energy, which enables the precipitate to attach and grow easily, thus forming a uniformly distributed coating layer on the surface of the ternary precursor. After the coated precursor is sintered into a cathode material, a part of the coating can form a protective layer on the surface of the material, reducing the dissolution of Ni and Co, inhibiting a side reaction between the cathode material and the electrolytic solution, and reducing irreversible phase changes on a surface of the material, thus improving a stability of a ternary material. Another part of the coating can penetrate into the material to form bulk phase doping.
2. Radiuses of the coated metal cations are similar to those of Li⁺ and Ni²⁺, which can effectively reduce a disordering degree of lithium and nickel and inhibit capacity decay of the material.
3. A part of the coated polyanions penetrates into the material during sintering. Because the radiuses of the polyanions are large, the polyanions can increase volume of a unit cell, play a role of supporting a three-dimensional frame structure of the material, expand a lithium ion transmission channel, inhibit phase transition of the material during charging and discharging processes, and improve electrochemical performances of the material. Moreover, the polyanions can provide a part of oxygen atoms in a sintering process, which can reduce oxygen defects inside the material. The polyanions have a strong network structure formed of covalent bonds, which can inhibit oxygen evolution of the material in the charging and discharging processes and reduce side reactions.
4. One-step precipitation method is employed in this technical solution, which can prepare the composite coating on the surface of the ternary precursor. The coating is evenly distributed, and the preparation process thereof is simple and can be widely used. Therefore, a material with high particle sphericity, high capacity, and good cycle performance can be prepared.

### BRIEF DESCRIPTION OF DRAWINGS

The present disclosure will be further explained with reference to the accompanying drawings and examples hereinafter, wherein:
FIG. 1 is an SEM graph of a composite coated ternary precursor obtained in Example 1 of the present disclosure;
FIG. 2 is an EDS graph of the composite coated ternary precursor obtained in Example 1 of the present disclosure; and

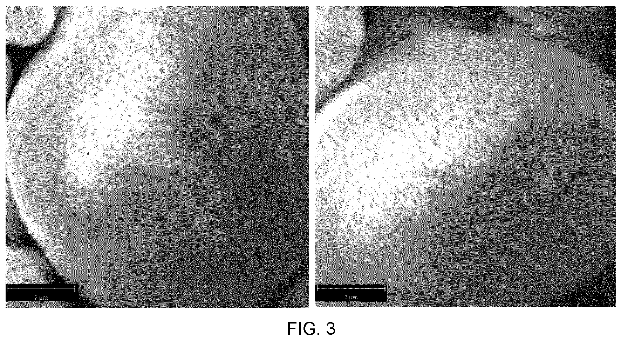

FIG. 3 is an SEM graph of precursor particles obtained in Comparative Example 1 of the present disclosure.

### DETAILED DESCRIPTION

The concepts and the produced technical effects of the present disclosure will be clearly and completely described in conjunction with the examples so as to sufficiently understand the objects, the features and the effects of the present disclosure. Obviously, the described examples are merely some examples of the disclosure, rather than all the examples. Other examples obtained by those skilled in the art without going through any creative effort shall all fall within the protection scope of the present disclosure.

### Example 1

In this example, a composite coated ternary precursor was prepared, and the specific process was as follows:
(1) preparing an undoped ternary precursor by coprecipitation: simultaneously introducing a nickel-cobalt-manganese mixed solution prepared according to a molar ratio of 82: 12: 6, a precipitant and a complexing agent into a reaction kettle, keeping an inert gas atmosphere, a stirring speed of 300 r/min, a temperature of 70 °C and pH of a reaction system of 11 to 12, and preparing a precursor Ni_{0.82}Co_{0.12}Mn_{0.06}(OH)₂ by a coprecipitation reaction; when particles grew to 10.5 µm, adjusting the pH value of the reaction system to be between 7.0 and 8.0, stopping adding the solution, and leaving the reaction materials in the kettle;
(2) preparing 1 mol/L of a magnesium sulfate solution and 1 mol/L of a sodium silicate solution;
(3) preparing a composite coated precursor: keeping the stirring speed and the temperature of the reaction kettle in step (1) unchanged, simultaneously introducing 5 L of magnesium sulfate solution and 5 L of sodium silicate solution into the reaction kettle in step (1) at a flow rate of 5 L/h, keeping the pH value of the reaction system to be between 7.0 and 8.0, under the action of stirring, subjecting cations and anions to a precipitation reaction and uniformly coating on a surface of the precursor to form a magnesium silicate coating film, wherein the coating reaction lasted for 1 hour, and a content of the coating was 1% of a mass fraction of the precursor; and
(4) collecting materials: collecting the precipitate in step (3) into an aging tank, and then filtering, washing, drying, screening and packaging the precipitate to obtain the composite coated ternary precursor.

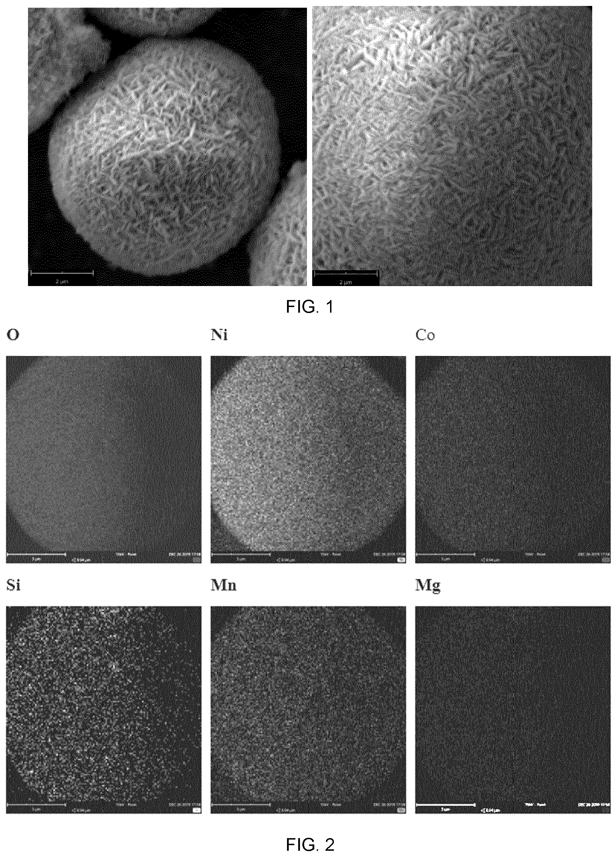

FIG. 1 is an SEM graph of the composite coated ternary precursor obtained in this example. It can be seen from the figure that although magnesium silicate is coated, the coating uniformly and compactly forms a coating film, which hardly changes the original morphology of the precursor.

FIG. 2 is an EDS graph of the composite coated ternary precursor obtained in this example. It can be seen from the figure that the coated Mg and Si elements are uniformly distributed.

### Example 2

In this example, a composite coated ternary precursor was prepared, and the specific process was as follows:
(1) preparing a doped ternary precursor by coprecipitation: dissolving nickel sulfate, cobalt sulfate, manganese sulfate and magnesium sulfate in pure water according to a molar ratio of 0.82: 0.12: 0.05: 0.01, and stirring evenly to prepare 1.6 mol/L of a mixed metal salt solution; dissolving sodium hydroxide in pure water, then adding sodium silicate, and stirring evenly to prepare 5 mol/L of a doped precipitant, wherein a molar ratio of the sodium hydroxide to the sodium silicate was 200: 1; adding a proper amount of pure water into the reaction kettle, starting stirring and heating at a stirring speed of 300 r/min and a reaction temperature of 65 °C, adding aqueous ammonia into the reaction kettle to make a concentration of the aqueous ammonia in the solution in the kettle be 6 g/L, adding a small amount of undoped sodium hydroxide solution to adjust a pH value in the kettle to be between 11.4 and 11.6, and continuously introducing nitrogen into the kettle to prevent oxidation, and meanwhile, pumping the mixed metal salt solution, the doped precipitant and aqueous ammonia into the reaction kettle for coprecipitation reaction, keeping the reaction temperature and the concentration of the aqueous ammonia unchanged, controlling nucleation and growth of precursor particles by adjusting pH of the reaction system to obtain doped ternary precursor particles with a particle size D50 of 10 µm, and leaving the reaction materials in the kettle;
(2) preparing 0.5 mol/L of a zirconium sulfate solution and 1 mol/L of an ammonium dihydrogen phosphate solution;
(3) preparing a composite coated precursor: keeping the stirring speed and the temperature of the reaction kettle in step (1) unchanged, simultaneously introducing 4.6 L of the zirconium sulfate solution and 4.6 L of the ammonium dihydrogen phosphate solution into the reaction kettle in step (1) at a flow rate of 3.8 L/h, keeping the pH value of the reaction system to be between 6.5 and 7.5, under the action of stirring, subjecting cations and anions to a precipitation reaction and uniformly coating on a surface of the precursor to form a zirconium phosphate coating film, wherein the coating reaction lasted for 1.2 hours, and a content of the coating was 1.5% of a mass fraction of the precursor; and
(4) collecting materials: collecting the precipitate in step (3) into an aging tank, and then filtering, washing, drying, screening and packaging the precipitate to obtain the composite coated ternary precursor.

### Example 3

In this example, a composite coated ternary precursor was prepared, and the specific process was as follows:
(1) preparing an undoped ternary precursor by coprecipitation: simultaneously introducing a nickel-cobalt-manganese mixed solution prepared according to a ratio of 5: 2: 3, a precipitant and a complexing agent into a reaction kettle, keeping an inert gas atmosphere, a stirring speed of 350 r/min, a temperature of 55 °C and pH of a reaction system of 11 to 12, and preparing a precursor Ni_{0.5}Co_{0.2}Mn_{0.3}(OH)₂ by a coprecipitation reaction; when particles grew to 5 µm, adjusting the pH value of the reaction system to be between 7.0 and 8.0, stopping adding the solution, and leaving the reaction materials in the kettle;
(2) preparing 1.5 mol/L of a copper sulfate solution and 1 mol/L of a sodium molybdate solution;
(3) preparing a composite coated precursor: keeping the stirring speed and the temperature of the reaction kettle in step (1) unchanged, simultaneously introducing 3.9 L of the copper sulfate solution and 5.9 L of the sodium molybdate solution into the reaction kettle in step (1) at a flow rate of 2.6 L/h, keeping the pH value of the reaction system to be between 7.0 and 8.0, under the action of stirring, subjecting cations and anions to a precipitation reaction and uniformly coating on a surface of the precursor to form a copper molybdate coating film, wherein the coating reaction lasted for 1.5 hours, and a content of the coating was 3% of a mass fraction of the precursor; and
(4) collecting materials: collecting the precipitate in step (3) into an aging tank, and then filtering, washing, drying, screening and packaging the precipitate to obtain the composite coated ternary precursor.

### Example 4

In this example, a composite coated ternary precursor was prepared, and the specific process was as follows:
(1) preparing an undoped ternary precursor by coprecipitation: simultaneously introducing a nickel-cobalt-manganese mixed solution prepared according to a molar ratio of 6: 2: 2, a precipitant and a complexing agent into a reaction kettle, keeping an inert gas atmosphere, a stirring speed of 500 r/min, a temperature of 60 °C and pH of a reaction system of 10 to 12, and preparing a precursor Ni_{0.6}Co_{0.2}Mn_{0.2}(OH)₂ by a coprecipitation reaction; when particles grew to 4 µm, adjusting the pH value of the reaction system to be between 7.0 and 8.0, stopping adding the solution, and leaving the reaction materials in the kettle;
(2) preparing 1.2 mol/L of a zinc sulfate solution and 1.5 mol/L of a sodium silicate solution;
(3) preparing a composite coated precursor: keeping the stirring speed and the temperature of the reaction kettle in step (1) unchanged, simultaneously introducing 5.9 L of the zinc sulfate solution and 4.7 L of the sodium silicate solution into the reaction kettle in step (1), wherein a flow rate of the zinc sulfate solution was 4.5 L/h, and a flow rate of the sodium silicate solution was 3.6 L/h, keeping the pH value of the reaction system to be between 7.5 and 8.5, under the action of stirring, subjecting cations and anions to a precipitation reaction and uniformly coating on a surface of the precursor to form a zinc silicate coating film, wherein the coating reaction lasted for 1.3 hours, and a content of the coating was 2% of a mass fraction of the precursor; and
(4) collecting materials: collecting the precipitate in step (3) into an aging tank, and then filtering, washing, drying, screening and packaging the precipitate to obtain the composite coated ternary precursor.

### Example 5

In this example, a composite coated ternary precursor was prepared, and the specific process was as follows:
(1) preparing an undoped ternary precursor by coprecipitation: simultaneously introducing a nickel-cobalt-manganese mixed solution prepared according to a molar ratio of 70: 5: 25, a precipitant and a complexing agent into a reaction kettle, keeping an inert gas atmosphere, a stirring speed of 550 r/min, a temperature of 62 °C and pH of a reaction system of 10.5 to 11.5, and preparing a precursor Ni_{0.70}Co_{0.05}Mn_{0.25}(OH)₂ by a coprecipitation reaction; when particles grew to 3 µm, adjusting the pH value of the reaction system to be between 7.0 and 8.0, stopping adding the solution, and leaving the reaction materials in the kettle;
(2) preparing 0.8 mol/L of a zirconium sulfate solution and 0.5 mol/L of a sodium wolframate solution;
(3) preparing a composite coated precursor: keeping the stirring speed and the temperature of the reaction kettle in step (1) unchanged, simultaneously introducing 1.6 L of the zirconium sulfate solution and 5.1 L of sodium wolframate solution into the reaction kettle in step (1), wherein a flow rate of the zirconium sulfate solution was 1.6 L/h, and a flow rate of the sodium wolframate solution was 5.1 L/h, keeping the pH value of the reaction system to be between 7.0 and 8.0, under the action of stirring, subjecting cations and anions to a precipitation reaction and uniformly coating on a surface of the precursor to form a zirconium tungstate coating film, wherein the coating reaction lasted for 1 hour, and a content of the coating was 1.5% of a mass fraction of the precursor; and
(4) collecting materials: collecting the precipitate in step (3) into an aging tank, and then filtering, washing, drying, screening and packaging the precipitate to obtain the composite coated ternary precursor.

### Comparative Example 1

In this comparative example, an uncoated ternary precursor was prepared, which was different from Example 1 in that only steps (1) and (4) were performed, and the specific process was as follows:
(1) preparing an undoped ternary precursor by coprecipitation: simultaneously introducing a nickel-cobalt-manganese mixed solution prepared according to a molar ratio of 82: 12: 6, a precipitant and a complexing agent into a reaction kettle, keeping an inert gas atmosphere, a stirring speed of 300 r/min, a temperature of 70 °C and pH of a reaction system of 11 to 12, and preparing a precursor Ni_{0.82}Co_{0.12}Mn_{0.06}(OH)₂ by a coprecipitation reaction; when particles grew to a required particle size, adjusting the pH value of the reaction system to between 7.0 and 8.0, and stopping adding the solution; and
(2) collecting the precipitate in step (1) into an aging tank, and then filtering, washing, drying, screening and packaging the precipitate to obtain the uncoated ternary precursor.

### Comparative Example 2

In this comparative example, a ternary precursor was prepared, which was different from Example 2 in that no coating or doping was carried out.

### Comparative Example 3

In this comparative example, an uncoated ternary precursor Ni_{0.5}Co_{0.2}Mn_{0.3}(OH)₂ was prepared, which was different from Example 3 in that only steps (1) and (4) were performed to obtain the uncoated ternary precursor.

### Comparative Example 4

In this comparative example, an uncoated ternary precursor Ni_{0.6}Co_{0.2}Mn_{0.2}(OH)₂ was prepared, which was different from Example 4 in that only steps (1) and (4) were performed to obtain the uncoated ternary precursor.

### Comparative Example 5

In this comparative example, an uncoated ternary precursor Ni_{0.70}Co_{0.05}Mn_{0.25}(OH)₂ was prepared, which was different from Example 5 in that only steps (1) and (4) were performed to obtain the uncoated ternary precursor.

### Experimental Example

The precursors of examples and comparative examples were mixed with a lithium salt, sintered at 500 °C to 800 °C to obtain cathode materials which were made into button-type half cells, subjected to charge-discharge tests at a voltage of 2.5 V to 3 V and a rate of 1 C. The results were shown in Table 1.

**Table 1**

| Sample | D50 (µm) | BET (m²/g) | TD (g/cm³) | First specific discharge capacity (mAh/g) | Capacity retention rate after 100 cycles (%) |
|---|---|---|---|---|---|
| Example 1 | 10.95 | 9.22 | 2.13 | 188 | 97.6 |
| Comparative Example 1 | 10.82 | 9.97 | 2.11 | 186 | 85.2 |
| Example 2 | 10.22 | 3.82 | 2.03 | 204 | 96.4 |
| Comparative Example 2 | 10.15 | 4.62 | 2.05 | 203 | 84.3 |
| Example 3 | 5.18 | 11.68 | 1.61 | 156 | 97.2 |
| Comparative Example 3 | 5.06 | 11.7 | 1.61 | 157 | 84.6 |
| Example 4 | 3.93 | 13.6 | 1.39 | 166 | 97.4 |
| Comparative Example 4 | 3.92 | 11.74 | 1.40 | 164 | 83.5 |
| Example 5 | 3.02 | 13.61 | 1.35 | 174 | 95.1 |
| Comparative Example 5 | 2.94 | 14.64 | 1.32 | 175 | 82.9 |

As can be seen from Table 1, the particle sizes, BETs and TDs of the precursor samples prepared in examples and comparative examples are very close. The first discharge specific capacities are almost the same, which shows that the coating does not significantly reduce the capacity of the material. However, after 100 cycles, the capacity retention rates of examples are higher than those of comparatives without being undoped by 10% or more, which indicates that the coated cations and anions can reduce the disordering of lithium and nickel, stabilize the structure of the material, reduce the side reactions and effectively improve the capacity and cycle performances of the ternary materials, through the synergistic effect.

The examples of the present disclosure are described in detail with reference to the drawings above, but the present disclosure is not limited to the above examples, and various changes may also be made within the knowledge scope of those of ordinary skills in the art without departing from the purpose of the present disclosure. In addition, in case of no conflict, the examples in the application and the features in the examples may be combined with each other.

## Claims

1. A composite coated ternary precursor, comprising a ternary precursor and a coating layer attached to a surface of the ternary precursor, wherein the coating layer is obtained by a precipitation reaction between a first metal ion and a first polyanion, the first metal ion is one or more selected from the group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ and Bi⁵⁺, and the first polyanion is one or more selected from the group consisting of SiO₃²⁻, AlO₂⁻, B₄O₇²⁻, SO₄²⁻ , PO₄³⁻, BO₃³⁻, MoO₄²⁻ and WO₄²⁻.

2. The composite coated ternary precursor of claim 1, wherein the ternary precursor is doped with a second metal ion and a second polyanion, the second metal ion is one or more selected from the group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ and Bi⁵⁺, and the second polyanion is one or more selected from the group consisting of SiO₃²⁻, PO₄³⁻, MoO₄²⁻ and B₄O₇²⁻.

3. A preparation method for the composite coated ternary precursor of claim 1 or 2, comprising:
S1: respectively preparing a first metal salt solution and a first polyanion salt solution, wherein the first metal salt solution is one or more selected from the group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ and Bi⁵⁺ salt solutions, and the first polyanion salt solution is one or more selected from the group consisting of SiO₃²⁻, AlO₂⁻, B₄O₇²⁻, SO₄²⁻ , PO₄³⁻, BO₃³⁻, MoO₄²⁻ and WO₄²⁻ salt solutions;
S2: at a certain stirring speed and temperature, adding the first metal salt solution and the first polyanion salt solution into a ternary precursor slurry to carry out a precipitation reaction, keeping pH of a reaction system to be between 6.0 and 9.0, and obtaining a precipitate after the reaction; and
S3: washing and drying the precipitate to obtain the composite coated ternary precursor.

4. The preparation method of claim 3, wherein in step S1, concentrations of the first metal salt solution and the first polyanion salt solution are independently 0.5 mol/L to 2 mol/L.

5. The preparation method of claim 3, wherein in step S2, the first metal salt solution and the first polyanion salt solution are added within 0.5 to 1.5 hours, and aged for 0.5 to 1.5 hours after the addition, and a total volume of the first metal salt solution and the first polyanion salt solution is 5 L to 15 L.

6. The preparation method of claim 3, wherein, when the ternary precursor is doped with the second metal ion and the second polyanion, the ternary precursor is prepared by a method comprising: dissolving soluble nickel salt, cobalt salt, manganese salt and second metal salt in water according to proportions to prepare a mixed metal salt solution, dissolving sodium hydroxide and a second polyanion salt in water to prepare a doped precipitant, and stirring the same at a certain speed and temperature, adding aqueous ammonia first, and then adding sodium hydroxide to adjust the pH to be between 9.5 and 12.5, and then adding the mixed metal salt solution, the doped precipitant and the aqueous ammonia for a coprecipitation reaction to obtain the ternary precursor, wherein the second metal salt is one or more selected from the group consisting of Mg²⁺, Sc³⁺, Ti³⁺, V²⁺, Cr²⁺, Cu²⁺, Zn²⁺, Ge²⁺, Zr⁴⁺, Nb⁵⁺, In³⁺, Sb³⁺, Tb⁴⁺, Ta⁴⁺, Re⁴⁺, Ir³⁺, Pb⁴⁺ and Bi⁵⁺ salts, and the second polyanion salt is one or more selected from the group consisting of SiO₃²⁻, PO₄³⁻, MoO₄²⁻ and B₄O₇²⁻ salts.

7. The preparation method of claim 6, wherein in the mixed metal salt solution, the second metal salt accounts for 0.1% to 2% of a total molar number of the nickel salt, the cobalt salt and the manganese salt.

8. The preparation method of claim 6, wherein a concentration of the mixed metal salt solution is 0.5 mol/L to 2.0 mol/L.

9. The preparation method of claim 6, wherein a concentration of the doped precipitant is 2 mol/L to 10 mol/L, and a molar ratio of the sodium hydroxide to the second polyanion salt in the doped precipitant is (30 to 300): 1.

10. A ternary cathode material prepared by sintering the composite coated ternary precursor of claim 1 or 2.
